# NEUE EUROPÄISCHE PATENTSCHRIFT

(11) **EP 2 697 842 B2**
(45) Veröffentlichungstag und Bekanntmachung des Hinweises auf die Entscheidung über den Einspruch: **16.02.2022**
(45) Hinweis auf die Patenterteilung: 22.05.2019
(21) Anmeldenummer: 12709534.7
(22) Anmeldetag: 13.03.2012
(51) Int. Cl.: H01M 50/10, H01M 50/103, H01M 50/20, H01M 50/258, H01M 10/04, H01M 6/42

(54) **SYSTEM UMFASSEND EIN ENERGIESPEICHERMODUL AUS MEHREREN PRISMATISCHEN SPEICHERZELLEN UND VERFAHREN ZUR HERSTELLUNG EINER ENDPLATTE DES ENERGIESPEICHERMODULS**
SYSTEM COMPRISING AN ENERGY STORAGE MODULE COMPRISING A PLURALITY OF PRISMATIC STORAGE CELLS AND METHOD FOR PRODUCING AN END PLATE OF THE ENERGY STORAGE MODULE
SYSTÈME COMPRENANT UN MODULE DE STOCKAGE D'ÉNERGIE CONSTITUÉ DE PLUSIEURS CELLULES DE STOCKAGE PRISMATIQUES ET PROCÉDÉ DE FABRICATION D'UNE PLAQUE D'EXTRÉMITÉ DU MODULE DE STOCKAGE D'ÉNERGIE

(30) Priorität: 14.04.2011 DE 102011007382
(43) Veröffentlichungstag der Anmeldung: 19.02.2014
(73) Patentinhaber: Bayerische Motoren Werke Aktiengesellschaft, 80809 München (DE)
(72) Erfinder: HÖFLER, Thomas, 82914 Groebenzell (DE); IDIKURT, Tuncay, 81541 München (DE); BEN SALAH, Semi, 80807 München (DE); MUCK, Alexander, 81827 München (DE)
(86) Internationale Anmeldenummer: PCT/EP2012/001107
(87) Internationale Veröffentlichungsnummer: WO 2012/139690

(56) Entgegenhaltungen:
- EP-A2- 1 575 103
- EP-A2- 1 760 806
- WO-A1-2012/041592
- WO-A2-2010/081704
- DE-A1- 19 503 085
- DE-A1-102005 031 504
- US-A1- 2001 031 392
- US-A1- 2010 247 996

## Beschreibung

Die Erfindung betrifft ein System umfassend eine Vorrichtung zur Spannungsversorgung, insbesondere eines Kraftfahrzeugs, und ein Energiespeichermodul aus mehreren prismatischen Speicherzellen, die, zumindest in einer Reihe gestapelt, hintereinander angeordnet und zwischen zwei Endplatten über Zuganker verspannt sind. Die Erfindung betrifft ferner ein Verfahren zur Herstellung einer Endplatte des Energiespeichermoduls und eine Vorrichtung zur Spannungsversorgung.

In einer üblicherweise als Batterie bezeichneten Vorrichtung zur Spannungsversorgung eines Kraftfahrzeugs kommt meist eine Mehrzahl an Energiespeichermodulen zum Antrieb des Fahrzeugs, beispielsweise von Elektrofahrzeugen oder Hybridfahrzeugen, zum Einsatz. Ein jeweiliges Energiespeichermodul besteht typischerweise aus mehreren gestapelten prismatischen Speicherzellen. Die einzelnen Speicherzellen enthalten elektrochemische Zellen der Batterie. Der Stapel aus den einzelnen Speicherzellen wird zumeist über eine mechanische Endplatte und Zuganker zu dem Energiespeichermodul verspannt. Die Endplatten und Zuganker dienen neben der mechanischen Fixierung der Module zueinander insbesondere dazu, eine Verformung durch Gasdruckänderungen, welche beim Betrieb in den im Inneren der Module angeordneten elektrochemischen Zellen auftreten, entgegenzuwirken.

Die Energiespeichermodule werden in Vorrichtungen zur Spannungsversorgung insbesondere in Kraftfahrzeugen, montiert. Dies geschieht üblicherweise mit einem Befestigungsmittel, beispielsweise einem Bolzen. Zur Verbindung zwischen Bolzen und Energiespeichermodul sind bisher Fortsätze am Energiespeichermodul vorgesehen. Durch diese Fortsätze wird das Befestigungsmittel gesteckt und kann somit beispielsweise im Kraftfahrzeug montiert werden. Diese Fortsätze ragen über das Energiespeichermodul hinaus und erhöhen somit in ungünstiger Weise den Bauraum des Energiespeichermoduls. Insbesondere werden oft mehrere Energiespeichermodule nebeneinander angeordnet, wobei dann die Energiespeichermodule beabstandets ein müssen, um sie über den Fort-satz mit dem Kraftfahrzeug zu verspannen.

Der WO 2010/081704 A2 ist ein Energiespeichermodul zu entnehmen, das vorgenannte Fortsätze aufweist.

Die ältere Druckschrift WO 2012/041592 betrifft ein Gehäuse für einen Lithium-Ionen-Akkumulator mit einem Lithium-Ionen-Akkumulatorzellenstapel aus mindestens zwei prismatischen Lithium-Ionen-Akkumulatorzellen, einen Lithium-Ionen-Akkumulator sowie ein Kraftfahrzeug mit einem elektrischen Antriebsmotor zum Antreiben des Kraftfahrzeugs und einem mit dem elektrischen Antriebsmotor verbundenen oder verbindbaren Lithium-Ionen-Akkumulator.

Es ist Aufgabe der vorliegenden Erfindung, ein System mit Energiespeichermodul einer Vorrichtung zur Spannungsversorgung anzugeben, das auf einfache Weise herstellbar ist und einen möglichst kleinen Bauraum des Energiespeichermoduls ermöglicht. Ferner ist es Aufgabe vorliegender Erfindung, ein Verfahren zur kostengünstigen und bauraumeffizienten Herstellung einer Endplatte des Energiespeichermoduls anzugeben.

Die Aufgabe wird gelöst durch die Merkmalskombinationen der unabhängigen Ansprüche. Die abhängigen Ansprüche zeigen vorteilhafte Ausgestaltungen der Erfindung.

Somit wird die Aufgabe gelöst durch ein System umfassend eine Vorrichtung zur Spannungsversorgung, insbesondere eines Kraftfahrzeugs und ein Energiespeichermodul aus mehreren prismatischen Speicherzellen, die zu mindestens einer Reihe gestapelt, hintereinander angeordnet und zwischen zwei Endplatten (auch Druckplatten genannt) über Zugelemente verspannt sind. Dabei umfasst zumindest eine der beiden Endplatten zumindest eine Ausnehmung zum Einführen eines Befestigungsmittels, wobei die Ausnehmung im Inneren der Endplatte ausgebildet ist, und wobei das Energiespeichermodul über das in der Ausnehmung eingeführte Befestigungsmittel in der Vorrichtung zur Spannungsversorgung befestigt ist.

Bei vorbekannten Lösungen benötigen Fortsätze am Energiespeichermodul zur Verschraubung mit beispielsweise der Karosserie zusätzlichen Bauraum in Richtung der Breite oder Länge des Energiespeichermoduls. Hierdurch wird der verfügbare Bauraum nicht optimal genutzt. Des Weiteren führen diese Fortsätze am Energiespeichermodul zu erhöhten Fertigungskosten der Energiespeichermodule. Erfindungsgemäß ist nun vorgesehen, dass der Bauraum, insbesondere die Dicke der Endplatten, welche sich aus der Eigenschaft ergibt, dass die Endplatten zum Verspannen der Speicherzellen genutzt werden, gleichzeitig für die Ausnehmung und somit für die Aufnahme des Befestigungsmittels genutzt wird. Die Zugelemente sind dazu ausgebildet, im Zusammenwirken mit den Endplatten eine auf die zu der Reihe gestapelten Speicherzellen wirkende Verspannungskraft zu erzeugen. Das Innere der Endplatte ist als Zwischenraum zwischen einer erste Fläche der Endplatte und einer zur erste Fläche parallelen zweiten Fläche der Endplatte definiert, wobei beide Flächen senkrecht zur Verspannungsrichtung der Zuganker liegen.

In vorteilhafter Ausführung ist vorgesehen, dass die gesamte Endplatte einstückig gefertigt ist. Dadurch können die Herstellungskosten reduziert werden.

Erfindungsgemäß erstreckt sich die Ausnehmung über die gesamte Höhe und/oder die gesamte Breite der Endplatte. Dadurch kann das Befestigungsmittel, insbesondere ein Bolzen, über die gesamte Länge oder Breite in die Endplatte eingesteckt werden und ist somit gut von oben zugänglich. Insbesondere ist die Ausnehmung über die gesamte Höhe oder die gesamte Breite der Endplatte im Inneren der Endplatte ausgebildet.

Ferner bilden die beiden Flächen jeweils eine geschlossene, mit Material gefüllte Fläche. Die Endplatte ist somit bevorzugt eine durchgehende Platte, welche in Blickrichtung der Verspannung der Speicherzellen keine Aussparungen umfasst. Besonders bevorzugt liegt eine der beiden Flächen im Inneren des Energiespeichermoduls plan an zumindest einer der Speicherzellen an.

Vorteilhafterweise sind die Zugelemente als Zuganker ausgebildet, weshalb das Energiespeichermodul zumindest an einer Seite durch einen der Zuganker begrenzt ist, wobei die Endplatte samt innen liegender Ausnehmung nicht über diesen Zuganker, insbesondere nicht in Verspannungsrichtung oder einer Richtung senkrecht zur Verspannungsrichtung, hervorsteht. Dadurch wird eine maximal mögliche Bauraumreduzierung ermöglicht.

Des Weiteren ist erfindungsgemäß vorgesehen, dass die Endplatte aus einem Strangpressprofil gefertigt ist, wobei die Endplatte in Richtung der Längserstreckung (Verschraubungsrichtung) der Ausnehmung stranggepresst ist. Findet das Strangpressen der Endplatte in Verschraubungsrichtung statt, so kann der sich ergebende Bauraum, resultierend aus der Dicke der Endplatte aufgrund der erforderlichen Verspannungskräfte für das Verspannen der Speicherzellen ebenso gut zur Integration des Befestigungsmittels, insbesondere des Bolzens, genutzt werden. Ferner kann durch die Integration des Befestigungsmittels im Strangpressprofil die erforderliche Nacharbeit des Strangpressprofils auf ein Absägen des Profils reduziert werden. Somit werden auch der Materialausschuss und der erforderliche Bauraum des Energiespeichermoduls minimiert.

Ferner ist bevorzugt vorgesehen, dass die Ausnehmung im Querschnitt hohlzylindrisch oder oval ist, wobei die Länge der Ausnehmung zumindest dem Dreifachen, insbesondere dem Fünffachen, insbesondere dem Siebenfachen, des kleinsten Durchmessers der Ausnehmung entspricht.

Darüber hinaus ist erfindungsgemäß ein Verfahren zur Herstellung einer Endplatte für ein soeben beschriebenes Energiespeichermodul vorgesehen. Das Verfahren umfasst ein Strangpressen der Endplatte, wobei die Ausnehmung zum Einführen des Befestigungsmittels während des Strangpressens gebildet wird und sich die Ausnehmung in Strangpressrichtung erstreckt. Hierbei erstreckt sich die Strangpressrichtung, die Aus-nehmung selbst als auch der einzuführende Bolzen in derselben Richtung, nämlich der Verschraubungsrichtung.

Die Vorrichtung zur Spannungsversorgung, insbesondere eines Kraftfahrzeugs, weist das Energiespeichermodul auf, nämlich ein Energiespeichermodul das mehrere prismatische Speicherzellen aufweist, die, zu mindestens einer Reihe gestapelt, hintereinander angeordnet und zwischen zwei Endplatten über Zugelemente verspannt sind, wobei zumindest eine der beiden Endplatten zumindest eine Ausnehmung zum Einführen eines Befestigungsmittels aufweist, wobei die Ausnehmung im Inneren der Endplatte ausgebildet ist, und wobei das Energiespeichermodul über das in die Ausnehmung eingeführte Befestigungsmittel in der Vorrichtung zur Spannungsversorgung befestigt ist.

Die im Rahmen des Energiespeichermoduls beschriebenen vorteilhaften Ausgestaltungen finden entsprechend vorteilhafte Anwendung im Rahmen des erfindungsgemäßen Verfahrens zur Herstellung der Endplatte.

Die Erfindung wird nachfolgend anhand der Zeichnung näher erläutert. Dabei zeigt:
- Figur 1: Speicherzellen des Energiespeichermoduls des erfindungsgemäßen Systems gemäß dem Ausführungsbeispiel,
- Figur 2: das Zusammensetzen von Endplatten und Zugelementen des Energiespeichermoduls des erfindungsgemäßen Systems gemäß dem Ausführungsbeispiel,
- Figur 3: einen weiteren Schritt bei der Zusammensetzung des Energiespeichermoduls gemäß des erfindungsgemäßen Systems dem Ausführungsbeispiel,
- Figur 4: das Energiespeichermodul, teilweise bestückt mit Speicherzellen des erfindungsgemäßen Systems gemäß dem Ausführungsbeispiel,
- Figur 5: das Energiespeichermodul des erfindungsgemäßen Systems gemäß Ausführungsbeispiel, voll bestückt mit Speicherzellen,
- Figur 6: ein Verspannen des Energiespeichermoduls des erfindungsgemäßen Systems gemäß Ausführungsbeispiel,
- Figur 7: eine herkömmliche, nicht erfindungsgemäße Verschraubung eines Energiespeichermoduls, und
- Figur 8: eine Verschraubung des Energiespeichermod des erfindungsgemäßen Systems gemäß Ausführungsbeispiel.

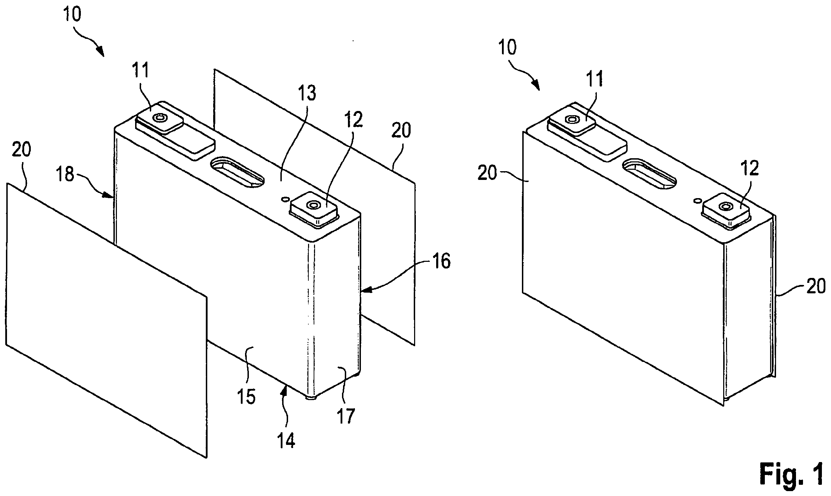

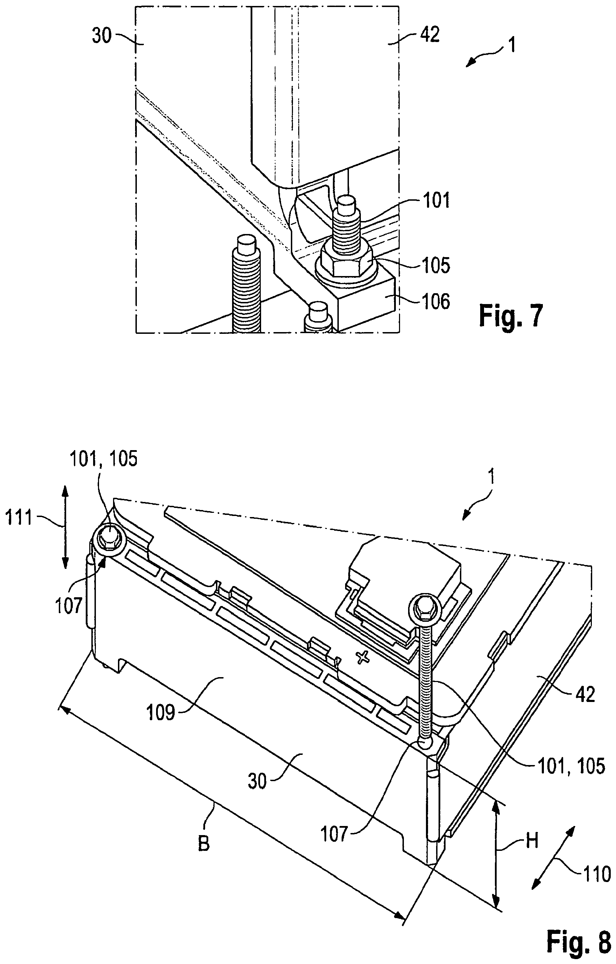

Im Folgenden wird die Erfindung anhand der Figuren 1 bis 6 und 8 genauer erläutert. Figur 7 zeigt eine herkömmliche, nicht erfindungsgemäße Verschraubung eines Energiespeichermoduls.

In Figur 1 ist eine einzelne prismatische Speicherzelle 10 eines in seiner Gesamtheit später dargestellten Energiespeichermoduls 1 in perspektivischer Darstellung zu sehen. Die Speicherzelle 10 besteht typischerweise aus einer oder mehreren einzelnen elektrochemischen Zellen, welche in der hier gewählten Darstellung im Inneren der Speicherzelle 10 im Verborgenen liegen. Auf einer Vorderseite 13 weist die Speicherzelle 10 ein Anschlussterminal 11 erster Polarität und ein Anschlussterminal 12 zweiter Polarität auf. Auf der in der Figur nicht dargestellten Rückseite 14 der Speicherzelle 10 sind keine Anschlussterminals vorgesehen. Eines der Anschlussterminals 11, 12, typischerweise der Plus-Pol der Speicherzelle, kann elektrisch mit einem Gehäuse der Speicherzelle 10 verbunden sein.

Da in dem Energiespeichermodul 1 mehrere der Speicherzellen 10 zumindest in einer Reihe gestapelt hintereinander angeordnet werden, werden zumindest gegenüberliegende Hauptflächen 14, 15 mit einem elektrisch isolierenden Material versehen. In dem in Figur 1 dargestellten Ausführungsbeispiel wird eine Klebefolie 20 auf die Hauptflächen 15, 16 aufgebracht. Alternativ könnte auf die Hauptflächen 15, 16 auch ein elektrisch isolierender Kleber aufgebracht werden. Ebenso wäre die Verwendung eines Schrumpfschlauchs, der auf die mit Kleber versehenen Hauptflächen 15, 16 aufgebracht wird, denkbar.

In der Figur 1 sind weiterhin gegenüberliegende Stirnseiten der Speicherzelle 10 mit den Bezugszeichen 17 und 18 gekennzeichnet.

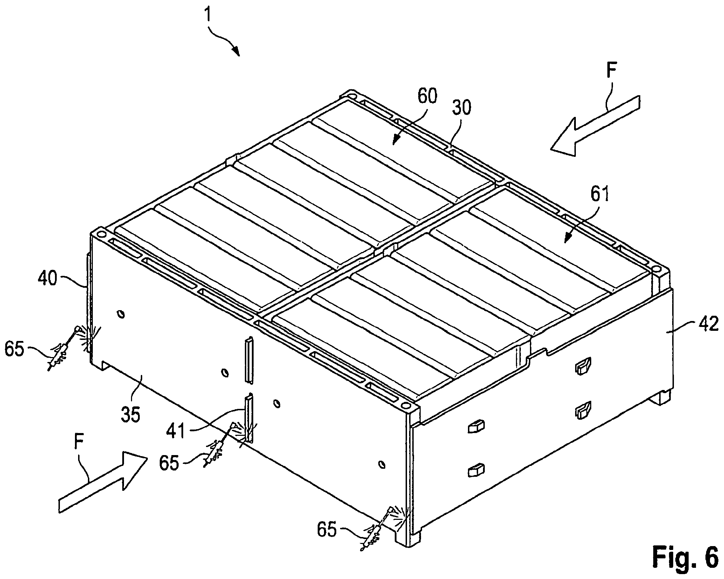

Bei dem Energiespeichermodul werden die Speicherzellen 10 in lediglich beispielhaft zwei Speicherzellen-Reihen 60, 61 angeordnet, wie dies beispielsweise Figur 6 zu entnehmen ist. Die Verspannung der zu einer Reihe gestapelten Speicherzellen erfolgt im Ausführungsbeispiel unter Verwendung von Endplatten 30, 35 und Zugelementen, die als Zuganker 40 bis 42 ausgeführt sind. Dass die Zugelemente im vorliegenden Ausführungsbeispiel als Zuganker ausgeführt sind, soll keine einschränkende Wirkung auf die Erfindung haben. Selbstverständlich können die Zugelemente aus als Spannbänder oder als eine Kombination, bestehend aus einer Anzahl von Schrauben und Muttern ausgeführt sein.

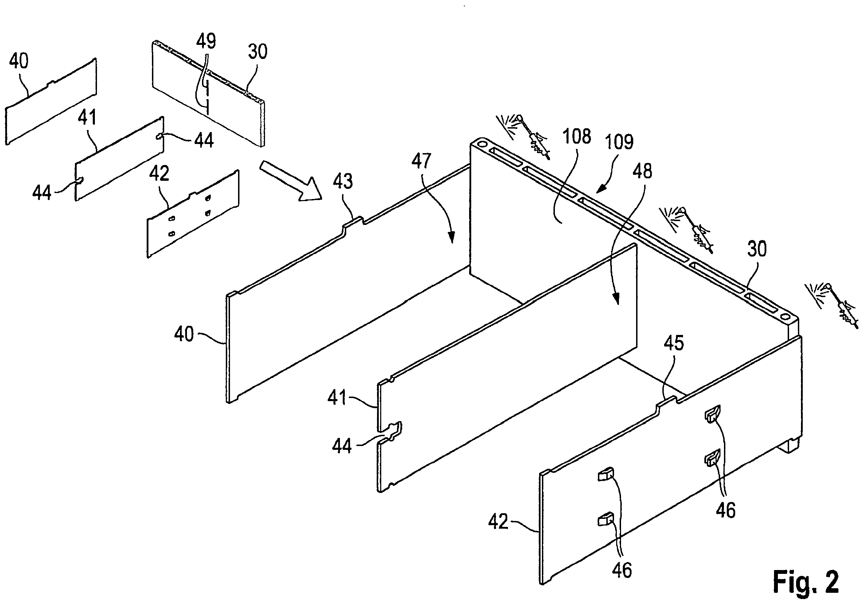

In der perspektivischen Darstellung der Figur 2 ist ein Zwischenbauteil einer Spannvorrichtung dargestellt, bei dem eine Endplatte 30, die auch als Druckplatte bezeichnet wird, mit drei flächig ausgebildeten Zugankern 40, 41, 42 verschweißt wird bzw. ist. Die Zuganker 40, 41, 42 verlaufen parallel und sind derart zueinander beabstandet, dass jeweils ein Aufnahmebereich 47, 48 für die jeweilige Speicherzellen-Reihe 60, 61 geschaffen ist. Jede er Speicherzellen-Reihen ist damit seitlich von zwei Zugankern 40, 41 bzw. 41, 42 umgeben.

Die Zuganker 40, 42 weisen jeweils eine Nase 43, 45 auf, die in Längserstreckung der Zuganker in etwa mittig angeordnet ist. Darüber hinaus sind an dem Zuganker 42 vier Laschen 46 vorgesehen, an denen eine Steuerung befestigt werden kann. Im Vergleich zu den Zugankem 40, 42 ist der Zuganker 41 dicker ausgebildet. Beispielsweise weisen die Zuganker 40, 42 eine Dicke von 2 mm und der Zuganker 43 eine Dicke von 3 mm auf. Hierdurch ist eine gleichmäßige Ausdehnung des Energiespeichermoduls parallel zur Kraftrichtung der Verspannung (d.h. in Erstreckungsrichtung der Zuganker 40, 41, 42) sichergestellt, wenn sich die Speicherzellen 10 in den beiden Speicherzellen-Reihen aufgrund von Gasdruckänderungen, welche beim Betrieb der Speicherzellen 10 auftreten, verformen.

Die Verschweißung als Verbindung zwischen den Zugankern 40, 41, 42 und der Endplatte 30 stellt ein schnelles, sicheres und etabliertes Verbindungsverfahren im Bereich der Automobiltechnik dar. Während die Zuganker 40, 42 zur Verschweißung mit der Endplatte 30 mit deren Stirnseiten bündig in Anlage gebracht und verschweißt werden, wird der Zuganker 41, der im Bereich seiner beiden gegenüberliegenden Enden jeweils eine Nut 44 zur Bereitstellung jeweiliger Durchstecklaschen aufweist, in korrespondierende Aussparungen 49 der Endplatte 30 gesteckt und dann von der anderen Seite her verschweißt.

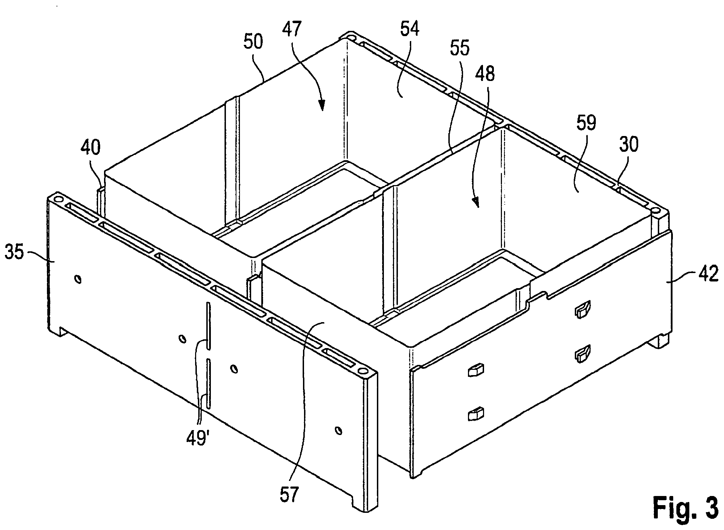

Wie Figur 3 zeigt, werden Isolationsmäntel 50, 55 in den Aufnahmebereichen 47, 48 der vorbereiteten Spannvorrichtung positioniert. Die Aufgabe der Isolationsmäntel 50, 55 besteht darin, eine Hochvolt-Isolation bereitzustellen. Die elektrischen Isolationseigenschaften eines jeweiligen Isolationsmantels 50, 55 sind derart, dass diese einen Berührschutz bezüglich einer durch die serielle Verschaltung aller Speicherzellen des Energiespeichermoduls erhaltenen Spannung bereitstellt. Da diese Spannung oberhalb der Berührschutzgrenze liegen kann, wird durch die Isolationsmäntel 50, 55 ein Schutz für den die Montage vornehmenden Monteur bereitgestellt. Das Vorsehen der Isolationsmäntel 50, 55 sorgt somit dafür, dass der aus den Endplatten 30, 35 und dem Zuganker 40, 41, 42 gebildete Druckrahmen elektrisch isoliert ist.

Nach dem Einbringen der Isolationsmäntel 50, 55 in das Zwischenbauteil der Figur 2 wird die Endplatte 35 lose auf dem mittleren Zuganker 41 vorpositioniert, indem die durch die Nut 44 (nicht ersichtlich) gebildeten Durchstecklaschen durch die korrespondierenden Aussparungen 49' der Endplatte 35 gesteckt werden.

Im weiteren Herstellungsablauf wird nun eine erste Speicherzelle 10 in einem der Aufnahmebereiche 47, 48 positioniert. Die Positionierung erfolgt dabei zunächst derart, dass die Rückseite 14 dabei nach oben zeigt.

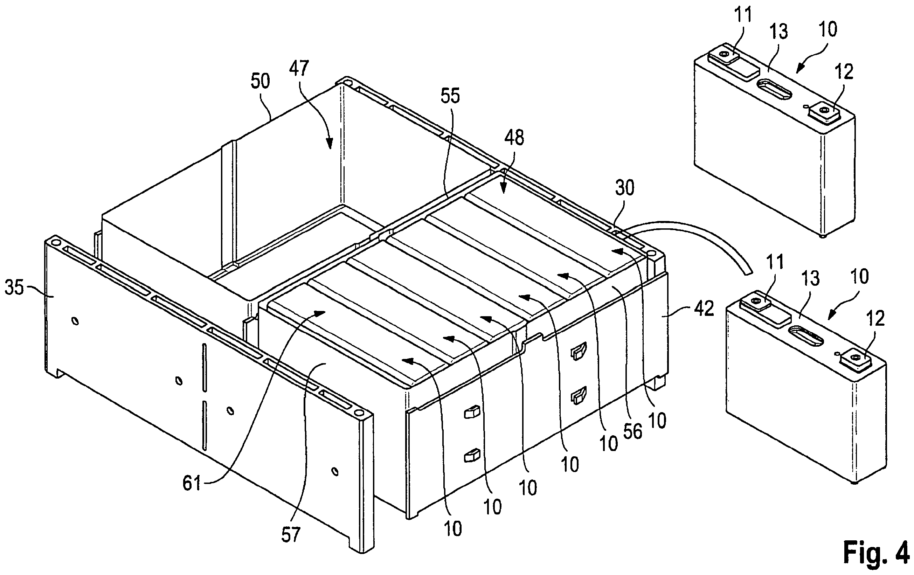

Wie aus Figur 4 ersichtlich ist, werden die Speicherzellen 10 sequentiell zunächst in den Aufnahmebereich 48 und anschließend in den Aufnahmebereich 47, oder umgekehrt, eingebracht. Dabei sind jeweils die Rückseiten 14 dem Betrachter bzw. Monteur zugewandt. Im vorliegenden Ausführungsbeispiel weist eine Speicherzellen-Reihe 61 sechs hintereinander angeordnete Speicherzellen 10 auf. In entsprechender Weise weist die in den Aufnahmebereich 47 eingebrachte Speicherzellen-Reihe 60 ebenfalls sechs Speicherzellen 10 auf, was in Figur 4 jedoch noch nicht erkennbar ist. Prinzipiell könnte ein Energiespeichermodul eine andere Anzahl an hintereinander angeordneten Speicherzellen 10 aufweisen. Ebenso könnte die Anzahl der nebeneinander angeordneten Speicherzellen-Reihen variiert werden.

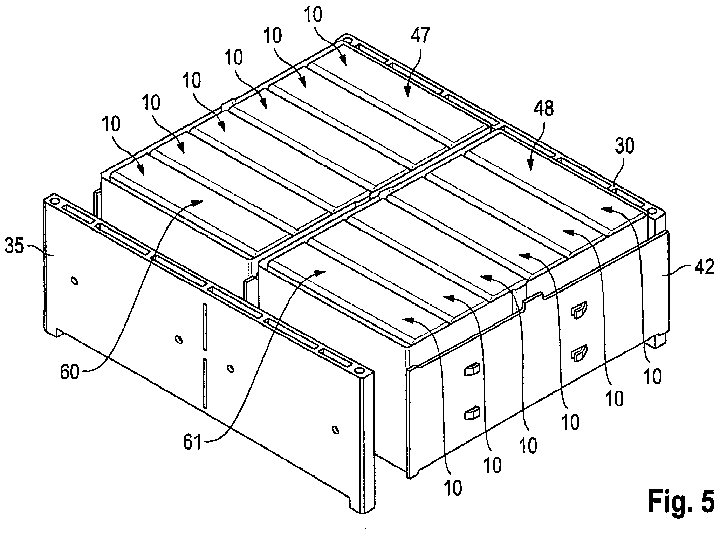

Figur 5 zeigt das Energiespeichermodul 1, bei dem in dem Aufnahmebereich 47 die Speicherzellen-Reihe 60 in der beschriebenen Weise angeordnet ist. Die Positionierung und Ausrichtung der insgesamt zwölf Speicherzellen ist dabei derart, dass die Vorderseiten mit den Anschlussterminals (in Figur 5 nicht ersichtlich) in einer Ebene angeordnet sind. Anschließend erfolgt, wie dies in Figur 6 dargestellt ist, eine Beaufschlagung der Endplatten 30, 35 mit einer vorgegebenen Kraft F, durch die die Ausbauchungen der Speicherzellen 10 eliminiert werden. Anschließend erfolgt eine Verschweißung (Bezugszeichen 65) der Zuganker 40, 41, 42 mit der Endplatte 35. Durch die Verspannung wird eine erneute Ausdehnung der Speicherzellen 10 verhindert, wodurch die Performance und Lebensdauer der einzelnen Speicherzellen verbessert ist.

Figur 7 zeigt eine nicht erfindungsgemäße Verschraubung eines Energiespeichermoduls 1. Wie hier dargestellt ist, ragt bei dieser herkömmlichen Methode ein Fortsatz 106 über die Endplatte 30 hinaus. In diesem Fortsatz 106 steckt ein Bolzen 101 als Befestigungsmittel. Dieser Bolzen 101 ist mittels der Verschraubung 105 fixiert.

Im Gegensatz zu Figur 7 zeigt Figur 8 die erfindungsgemäße Befestigungsvariante des Energiespeichermoduls 1 in einer Vorrichtung, beispielsweise einem Kraftfahrzeug. Zu sehen ist ein Ausschnitt des Energiespeichermoduls 1 mit einer der beiden Endplatten 30. Die Endplatte 30 erstreckt sich über die Breite B und die Höhe H. Eine Innenseite der Endplatte 30 wird als erste Fläche 108 (siehe Figur 2) bezeichnet. Die außen liegende Fläche wird als zweite Fläche 109 bezeichnet. Die Endplatte 30 wurde, genauso wie auch die gegenüberliegende Endplatte 35, durch einen Strangpressvorgang in Richtung der Strangpressrichtung 111 hergestellt. Dabei entstand gleichzeitig mit dem Strangpressen die Ausnehmung 107, welche sich hohlzylindrisch entlang der gesamten Höhe H durch die Endplatte 30 erstreckt. Im Ausführungsbeispiel sind zwei der Ausnehmungen 107 vorgesehen. Die Ausnehmungen 107 erstrecken sich senkrecht zu einer Verspannungsrichtung 110. Die Verspannungsrichtung 110 ist gleichgerichtet mit der Kraft F (siehe Figur 6). In die Ausnehmungen 107 werden Befestigungsmittel, ausgebildet als Bolzen 101, gesteckt, um das Energiespeichermodul 1 mit einer Vorrichtung, beispielsweise einem Kraftfahrzeug, zu verschrauben. Wie Figur 8 verdeutlicht, befindet sich die Ausnehmung 107 zwischen der ersten und zweiten Fläche 108, 109 und innerhalb der Zuganker 40, 42. Dadurch vergrößert die Ausnehmung 107 den Bauraum des Energiespeichermoduls 1 nicht. Infolgedessen können mehrere der Energiespeichermodule 1 äußerst Platz sparend nebeneinander angeordnet werden.

### Bezugszeichenliste

- 1: Energiespeichermodul
- 10: Speicherzelle
- 11: Anschlussterminal erster Polarität
- 12: Anschlussterminal zweiter Polarität
- 13: Vorderseite
- 14: Rückseite
- 15: Hauptfläche
- 16: Hauptfläche
- 17: Stirnseite
- 18: Stirnseite
- 20: Klebefolie
- 30: Endplatte
- 35: Endplatte
- 40: Zugelement, insbesondere Zuganker
- 41: Zugelement, insbesondere Zuganker
- 42: Zugelement, insbesondere Zuganker
- 43: Nase
- 44: Nut
- 45: Nase
- 46: Lasche
- 47: Aufnahmebereich für Speicherzellenreihe
- 48: Aufnahmebereich für Speicherzellenreihe
- 49: Aussparung
- 49': Aussparung
- 50: Isolationsmantel
- 54: Stirnwand
- 55: Isolationsmantel
- 59: Stirnwand
- 60: Speicherzellen-Reihe
- 61: Speicherzellen-Reihe
- 65: Verschweißung
- 101: Bolzen
- 105: Schraubverbindung
- 106: Fortsatz
- 107: Ausnehmung
- 108: Erste Fläche
- 109: Zweite Fläche
- 110: Verspannungsrichtung
- 111: Längserstreckung/Strangpressrichtung
- B: Breite
- F: Kraft
- H: Höhe

## Patentansprüche

1. System umfassend eine Vorrichtung zur Spannungsversorgung, insbesondere eines Kraftfahrzeugs, und ein Energiespeichermodul (1), das mehrere prismatische Speicherzellen (10) aufweist, die, zu mindestens einer Reihe (60, 61) gestapelt, hintereinander mit einer Stapelrichtung angeordnet und zwischen zwei Endplatten (30, 35) über Zuganker (40-42) längs der Stapelrichtung verspannt sind, wobei zumindest eine der beiden Endplatten (30, 35) zumindest eine Ausnehmung (107) zum Einführen eines Befestigungsmittels (101) umfasst, wobei die Ausnehmung (107) im Inneren der Endplatte (30, 35) ausgebildet ist, und das Innere der Endplatte (30, 35) als Zwischenraum zwischen einer erste Fläche (108) der Endplatte (30, 35) und einer zur erste Fläche (108) parallelen zweiten Fläche (109) der Endplatte (30, 35) definiert ist, wobei beide Flächen senkrecht zur Verspannungsrichtung (110) der Zuganker (40-42) liegen, wobei das Energiespeichermodul (1) über das in die Ausnehmung (107) eingeführte Befestigungsmittel (101) in der Vorrichtung zur Spannungsversorgung befestigt ist, wobei die Zuganker (40-42) mit den Endplatten (30, 35) verschweißt sind, wobei die Endplatte (30, 35) aus einem Strangpressprofil gefertigt ist, wobei die Endplatte (30, 35) in Richtung der Längserstreckung (111) der Ausnehmung (107) stranggepresst ist, und wobei sich die Ausnehmung (107) über die gesamte Höhe (H) oder gesamte Breite (B) der Endplatte erstreckt.

2. System nach Anspruch 1, **dadurch gekennzeichnet, dass** die gesamte Endplatte (30,35) einstückig gefertigt ist.

3. System nach einem der vorhergehenden Ansprüche, **dadurch gekennzeichnet, dass** die Ausnehmung (107) über die gesamte Höhe (H) oder gesamte Breite (B) der Endplatte (30, 35) im Inneren der Endplatte (30,35) ausgebildet ist.

4. System nach einem der vorhergehenden Ansprüche, **dadurch gekennzeichnet, dass** die erste Fläche (108) und die zweite Fläche (109) jeweils eine geschlossene, mit Material gefüllte Fläche darstellen.

5. System nach Anspruch 4, **dadurch gekennzeichnet, dass** die erste Fläche (108) plan an zumindest einer der Speicherzellen (10) anliegt.

6. System nach einem der vorhergehenden Ansprüche, **dadurch gekennzeichnet, dass** das Energiespeichermodul (1) zumindest an einer Seite durch einen der Zuganker (42) begrenzt ist, wobei die Endplatte (30, 35) samt innenliegender Ausnehmung (107) nicht über diesen Zuganker (42), insbesondere nicht in Verspannungsrichtung (110) oder einer Richtung senkrecht zur Verspannungsrichtung (110), hervorsteht.

7. System nach einem der vorhergehenden Ansprüche, **dadurch gekennzeichnet, dass** die Ausnehmung (107) im Querschnitt hohlzylindrisch oder oval ist, wobei eine Länge der Ausnehmung (107) zumindest dem 3-fachen, insbesondere dem 5-fachen, insbesondere dem 7-fachen, eines kleinsten Durchmessers der Ausnehmung (107) entspricht.

8. Verfahren zur Herstellung einer Endplatte (30, 35) für ein Energiespeichermodul (1) eines Systems nach einem der vorhergehenden Ansprüche, **gekennzeichnet durch** folgenden Schritt:
Strangpressen der Endplatte (30, 35), wobei die Ausnehmung (107) zum Einführen des Befestigungsmittels (101) während des Strangpressens gebildet wird und sich die Ausnehmung (107) in Strangpressrichtung (111) erstreckt.

## Claims

1. System comprising a power supply device, especially of a motor vehicle, and an energy storage module (1) which has a plurality of prismatic storage cells (10) which, stacked to form at least one row (60, 61), are arranged in series with one stacking direction and are braced along the stacking direction between two end plates (30, 35) by means of tie rods (40 - 42), wherein at least one of the two end plates (30, 35) comprises at least one cutout (107) for introducing a fastening means (101), wherein the cutout (107) is formed in the interior of the end plate (30, 35), and the interior of the end plate (30, 35) is defined as an intermediate space between a first surface (108) of the end plate (30, 35) and a second surface (109), parallel to the first surface (108), of the end plate (30, 35), wherein both surfaces lie perpendicularly to the direction of bracing (110) of the tie rods (40 - 42), wherein the energy storage module (1) is fastened in the power supply device via the fastening means (101) which is introduced into the cutout (107), wherein the tie rods (40 - 42) are welded to the end plates (30, 35), wherein the end plate (30, 35) is manufactured from an extruded profile, wherein the end plate (30, 35) is extruded in the direction of the longitudinal extent (111) of the cutout (107), and wherein the cutout (107) extends over the entire height (H) or entire width (B) of the end plate.

2. System according to Claim 1, **characterized in that** the entire end plate (30, 35) is manufactured in one piece.

3. System according to one of the preceding claims, **characterized in that** the cutout (107) is formed in the interior of the end plate (30, 35) over the entire height (H) or entire width (B) of the end plate (30, 35).

4. System according to one of the preceding claims, **characterized in that** the first surface (108) and the second surface (109) in each case represent a closed surface which is filled with material.

5. System according to Claim 4, **characterized in that** the first surface (108) lies in planar manner against at least one of the storage cells (10).

6. System according to one of the preceding claims, **characterized in that** the energy storage module (1) is limited at least on one side by one of the tie rods (42), the end plate (30, 35) plus internal cutout (107) not projecting across this tie rod (42), especially not in the direction of bracing (110) or a direction perpendicular to the direction of bracing (110).

7. System according to one of the preceding claims, **characterized in that** the cutout (107) is hollow-cylindrical or oval in cross-section, with a length of the cutout (107) corresponding to at least 3 times, especially 5 times, especially 7 times, a smallest diameter of the cutout (107).

8. Process for producing an end plate (30, 35) for an energy storage module (1) of a system according to one of the preceding claims, **characterized by** the following step:
extruding of the end plate (30, 35), wherein the cutout (107) for introducing the fastening means (101) is formed during the extrusion and the cutout (107) extends in the direction of extrusion (111).

## Revendications

1. Système comprenant un dispositif d'alimentation en tension en particulier d'un véhicule, et un module de stockage d'énergie (1) qui comporte plusieurs cellules de stockage prismatiques (10), qui sont positionnées les unes derrière les autres le long de la direction d'empilage en étant empilées en au moins une rangée (60, 61), et sont serrées entre deux plaques d'extrémité (30, 35) par l'intermédiaire de tirants d'ancrage (40-42), au moins l'une des deux plaques d'extrémité (30, 35) ayant au moins un évidement (107) pour l'introduction d'un moyen de fixation (101), l'évidement (107) étant formé dans la partie interne de la plaque d'extrémité (30, 35) et la partie interne de la plaque d'extrémité (30, 35) étant définie en tant que volume intermédiaire entre une première face (108) de la plaque d'extrémité (30, 35) et une seconde face (109) de la plaque d'extrémité (30, 35) parallèle à la première face (108), les deux faces étant perpendiculaires à la direction de serrage (110) des tirants d'ancrage (40-42), le module de stockage d'énergie (1) étant fixé dans le dispositif d'alimentation en tension par l'intermédiaire des moyens de fixation (101) introduits dans l'évidement (107), les tirants d'ancrage (40-42) étant soudés avec les plaques d'extrémité (30, 35), la plaque d'extrémité (30, 35) étant réalisée à partir d'un profilé extrudé, la plaque d'extrémité (30, 35) étant extrudée dans la direction de l'extension longitudinale (111) de l'évidement (107), et l'évidement (107) s'étendant sur la hauteur totale (H) ou sur la largeur totale (B) de la plaque d'extrémité.

2. Système selon la revendication 1,
**caractérisé en ce que**
la plaque d'extrémité (30, 35) totale est réalisée en une seule pièce.

3. Système selon l'une quelconque des revendications précédentes,
**caractérisé en ce que**
l'évidement (107) est réalisé sur la hauteur totale (H) ou sur la largeur totale (B) de la plaque d'extrémité (30, 35) dans la partie interne de la plaque d'extrémité (30, 35).

4. Système selon l'une quelconque des revendications précédentes,
**caractérisé en ce que**
la première face (108) et la seconde face (109) représentent respectivement une face fermée remplie de matériau.

5. Système selon la revendication 4,
**caractérisé en ce que**
la première face (108) s'applique à plat sur au moins l'une des cellules de stockage (10).

6. Système selon l'une quelconque des revendications précédentes,
**caractérisé en ce que**
le module de stockage d'énergie (1) est délimité au moins sur un côté par l'un des tirants d'ancrage (42), et la plaque d'extrémité (30, 35), y compris l'évidement (107) situé dans sa partie interne ne dépasse pas de ce tirant d'ancrage (42), en particulier pas dans la direction de serrage (110) ou dans une direction perpendiculaire à la direction de serrage (110).

7. Système selon l'une quelconque des revendications précédentes,
**caractérisé en ce que**
l'évidement (107) a une section cylindrique creuse ou ovale, une longueur de l'évidement (107) correspondant à au moins 3 fois, en particulier 5 fois et en particulier 7 fois celle d'un plus petit diamètre de l'évidement (107) .

8. Procédé' de production d'une plaque d'extrémité (30, 35) destinée à un module de stockage d'énergie (1) selon l'une quelconque des revendications précédentes,
**caractérisé par** l'étape suivante :
extrusion de la plaque d'extrémité (30, 35), l'évidement (107) pour l'introduction du moyen de fixation (101) étant formé pendant l'extrusion, et l'évidement (107) s'étendant dans la direction d'extrusion (111).
